**Europäisches Patentamt**

**European Patent Office**

**Office européen des brevets**

(19)

(11) Veröffentlichungsnummer: **0 133 893**
A2

# EUROPÄISCHE PATENTANMELDUNG

(12)

(21) Anmeldenummer: **84107258.0**

(22) Anmeldetag: **25.06.84**

(51) Int. Cl.⁴: **B 29 C 67/14**

(30) Priorität: **15.11.83 DE 3341292**
**02.07.83 DE 3323906**

(43) Veröffentlichungstag der Anmeldung: **13.03.85**
**Patentblatt 85/11**

(84) Benannte Vertragsstaaten: **DE FR GB IT NL**

(71) Anmelder: **BAYER AG, Konzernverwaltung RP**
**Patentabteilung, D-5090 Leverkusen 1 Bayerwerk (DE)**

(72) Erfinder: **von Bonin, Wulf, Dr., Mendelssohnstrasse 30,**
**D-5090 Leverkusen 1 (DE)**
Erfinder: **von Gizycki, Ulrich, Dr., Wiembachallee 24,**
**D-5090 Leverkusen 3 (DE)**

(54) **Verfahren zur Herstellung von faserverstärkten Formkörpern.**

(57) Verfahren zur Herstellung von faserverstärkten Formkörpern aus thermoplastischem Material durch Heißverpressen von Halbzeugen, in dem als Halbzeuge flexible textile Gebilde verwendet werden, die aus Gemischen von mindestens zwei Fasertypen aufgebaut sind, wobei mindestens eine Fasertype unter den Heißpreßbedingungen schmelzbar ist und als Thermoplast fungiert und mindestens eine andere Fasertype unter den vorgenannten Heißpreßbedingungen als solche erhalten bleibt.

EP 0 133 893 A2

0133893

BAYER AKTIENGESELLSCHAFT          5090 Leverkusen, Bayerwerk
Konzernverwaltung RP
Patentabteilung                   G/Ke/Rz


Verfahren zur Herstellung von faserverstärkten
Formkörpern

Formteile aus faserverstärkten Thermoplasten werden üblicherweise hergestellt, indem in Thermoplastgranulate
Fasern eingearbeitet werden oder Gemische aus Thermoplastgranulaten oder -Pulvern und Fasern in der Hitze
z.B. auf Extrudern oder Spritzgußmaschinen verformt
werden.

Diese Verfahren gestatten nicht die Einarbeitung von langen Fasern in die Thermoplastmatrix, z.B. von Geweben,
und lassen aufgrund der Einarbeitungs- und Verarbeitungsprobleme meist nicht mehr als 30 Gewichtsprozent Verstärkungsfasern, z.B. Glasfasern zu.

Tränkt man Gewebe aus Verstärkungsfasern mit Thermoplastmaterialien, so erhält man starre Halbzeuge, die in Pressen heiß verformt werden können zu Formteilen mit guten
Eigenschaften. Auch bei diesen Prozessen ist wegen der
erforderlichen Gleichmäßigkeit der Imprägnierung die
Menge an einzuarbeitendem Verstärkungsgewebe limitiert.
Die starren Halbzeuge sind jedoch aufgrund ihrer Starrheit oft unvorteilhaft in der Handhabung und Verarbeitung.

Le A 22 119 - Ausland

Bestreut man Gewebe mit Thermoplastpulvern, so hat man zwar ein flexibles Halbzeug, das sich bequem in Formen o.ä. einlegen läßt, beim Heißverpressen sind die Viskositäten und Fließwege der entstehenden Thermoplastschmelze jedoch so ungünstig, daß die einzelnen Fasern der Gewebegarne nicht oder nur sehr unvollständig vom Thermoplast umflossen bzw. umschlossen werden können, d.h. es resultieren Formteile mit unbefriedigenden mechanischen Eigenschaften.

Glasfaserverstärkte Profile mit hohen Anteilen an Verstärkungsfasern werden gemäß dem Stand der Technik erhalten, wenn Faserstränge (Rovings) mit Reaktionsharzen, die in relativ dünnflüssiger Form vorliegen, getränkt und dann durch beheizte Kalibrierstrecken gezogen und so unter Verformung ausgehärtet werden. Derartige Profile sind jedoch duroplastisch, d.h., sie sind vernetzt und können später in der Wärme nicht verformt werden. Dieses Verfahren ist auf Reaktionsharze beschränkt und für den Einsatz von vorgefertigten hochmolekularen thermoplastischen Polymerwerkstoffen nicht geeignet. Es besteht jedoch oftmals das Bedürfnis, gerade solche hoch verstärkungsfaserhaltige Profile aus Thermoplasten herzustellen.

Die vorliegende Erfindung überwindet die geschilderten Probleme und führt überraschenderweise zu im wesentlichen lunkerfreien Thermoplastformteilen mit Verstärkungsfasergehalten bis zu über 70 Gew.-% (z.B. Glas) und Faserlängen beliebigen Ausmaßes, wobei die Fasern sehr weitgehend vom Thermoplastmaterial als homogener Matrix umschlossen werden, so daß gute mechanische Eigenschaften resultieren.

Le A 22 119

Das vorliegende Verfahren zur Herstellung von faserverstärkten Formteilen aus Thermoplasten bezieht sich auf den Einsatz von flexiblen textilen Halbzeugen aus Gemischen von mindestens zwei Faserarten, bei denen mindestens eine Faserart schmelzbar ist und als Thermoplast fungiert und mindestens eine Faserart beim Schmelzen der vorgenannten Faserart als solche erhalten bleibt, wenn die textilen Halbzeuge unter Verformung heißverpreßt werden.

In einer besonderen Ausführungsform werden - bevorzugt kontinuierlich - faserverstärkte Profile und .Formteile aus flexiblen textilen Halbzeugen in Form von Faserbündeln oder Fasersträngen aus Gemischen von mindestens zwei Faserarten der oben angegebenen Beschaffenheit hergestellt.

Hier, wie in allen folgenden Teilen der Erfindungsbeschreibung, wird als Faser ein endloses oder begrenzt langes Monofil verstanden, während als Garn die Zusammenfassung vieler Fasern zu einem Multifilamentgarn bezeichnet wird. Stapelfasern sind - wie üblich - kurz geschnittene Fasern.

Das vorliegende Verfahren zur Herstellung von faserverstärkten Formkörpern aus thermoplastischem Material durch Heißverpressen von Halbzeugen ist dadurch gekennzeichnet, daß man als Halbzeuge flexible textile Gebilde verwendet, die aus Gemischen von mindestens zwei (im wesentlichen parallel liegenden) Fasertypen aufgebaut sind, wobei mindestens eine Fasertype unter Heißpreßbedingungen schmelzbar ist und als Thermoplast fungiert und mindestens eine andere Fasertype unter den vorgenannten Bedingungen als solche erhalten bleibt und im Fertigteil als verstärkende Faser fungiert.

Le A 22 119

In einer besonderen Ausführungsform sind diese flexiblen textilen Gebilde Faserbündel oder -stränge aus den inrede stehenden Fasern.

Als Thermoplast oder thermoplastisches Material werden alle Werkstoffe verstanden, die sich reversibel oder auch intermediär thermoplastisch verarbeiten lassen. Solche Materialien sind beispielsweise Metalle und deren Legierungen, Gläser und insbesondere organische Werkstoffe. Bei den organischen Werkstoffen handelt es sich vor allem um bekannte Thermoplasten oder Thermoplastlegierungen, Thermoplastmischungen bzw. -kombinationen. Es kann sich aber auch um thermoplastische Reaktivsysteme handeln, die beim Erhitzen eine thermoplastische Phase durchlaufen und dann unter Molekülvergrößerung oder Vernetzung ihren Thermoplastcharakter irreversibel verlieren. Aus der Fülle der organischen Werkstoffe seien beispielhaft genannt: Aliphatische aromatische, araliphatische, cyclische und heterocyclische Polymere und gegebenenfalls Oligomere wie etwa Vinylpolymere z.B. Polyolefine, Polyvinylester, Polyvinyläther, Polyacryl und -methacrylverbindungen, Polyvinylaromaten, Polyvinylhalogenide sowie die verschiedensten Copolymeren, Block-, Pfropf-, Mischpolymere oder Polymergemische: Polyaethylene, Polypropylene, Polybutene, Polypentene, Polyvinylchloridtypen, Polymethylmethacrylate, Poly(meth)acrylnitriltypen, Polystyroltypen und deren Modifizierungsprodukte, oder Mischsysteme wie ABS-Typen usw. Polyadditions-, Polykondensations-, Polyoxydations- oder Cyclisierungspolymere wie etwa Polyamide, Polyurethane, Polyharnstoffe, Polyimide, Polyester, Polyhydantoine, Polyphenylenoxyde, Polyphenylensulfide, Polysulfone, Polyaether, Polycarbonate, sowie deren Mischformen, deren Mischungen

Le A 22 119

und Kombinationen mit anderen Polymeren oder Polymervorstufen, beispielsweise Nylon, Perlon, Polyaethylentherephthalate, Bisphenol-A-Polycarbonat, usw. oder als
intermediär thermoplastische Werkstoffe, die zumeist als
Vorstufen zu höher polymeren Strukturen anzusehen sind:

Phenolharzvorläufer, Furanharzvorläufer, Melaminharze,
Epoxydverbindungen, Verbindungen mit polymerisationsfähigen Doppelbindungen, bzw. additionsfähigen Doppelbindungen, Polyimidvorläufer, höhermolekulare Polyisocyanate oder auch Kombinationen aus reaktionsfähigem Polymer und bei angemessen hohen Temperaturen reaktionsfähigem Vernetzer, z.B. OH-, NH- oder COOH-Gruppen enthaltende Polymere und Vernetzer mit Methylolgruppen.

Als flexible textile Gebilde werden z.B. verstanden
Faserstränge, Fasergarne, Gewirke, Gelege, Gestricke,
Gewebe, Vliese aus Fasern oder Garnen, die noch eine
Flexibilität besitzen, so daß sie zumindest aufgerollt
oder - ohne zu brechen - gebogen werden können, vorzugsweise haben solche Gebilde jedoch einen normalen, wenig
steifen textilen Charakter.

Die textilen, flexiblen Gebilde sollen aus Gemischen von
mindestens zwei, im wesentlichen parallel liegenden Fasertypen bestehen.
Hierbei ist es erfindungsgemäß auch möglich, zwei Fasertypen in einer Faser zu vereinen, indem man eine Bifilarfaser oder Kern-Mantelfaser verwendet; im erfindungsgemäßen Falle ist bei einer Kern-Mantelfaser der Thermoplast bevorzugt als Fasermantel angeordnet. Üblicherweise
sind die mindestens zwei Fasertypen jedoch als getrennte
Individuen im Gemisch in den textilen Gebilden enthalten.

Le A 22 119

0133893

Hierbei ist es möglich,die verschiedenen Fasertypen im Gemisch miteinander zu verarbeiten, wobei ein möglichst gleichförmiges Gemisch möglichst parallel liegender Fasern verschiedenen Typs anzustreben ist, es ist aber auch möglich, im textilen Gebilde Garne aus verschiedenen Fasertypen,z.B. Stapelfasern oder Endlosfasern,im möglichst gleichförmigen Gemisch zu verarbeiten, es können auch z.B. in einem Gewebe Kette und Schuß aus den verschiedenen Fasertypen bestehen.

Die statistisch möglichst gute Mischung möglichst parallel liegender Fasern verschiedenen Typs ist für endlose Fasern oder Langfasern durch Zusammenführen der verschiedenen Fasertypen durch simultanes Einspeisen in die üblichen textilen Verarbeitungsprozesse leicht erreichbar, bei Kurzfasern oder der Herstellung von Sandwichstrukturen kann auch ein Gemisch der verschiedenen Fasertypen durch z.B. elektrostatische Flockungsverfahren und gegebenenfalls späteres gerichtetes gleichförmiges Umlegen des Faserflors z.B. auf gegebenenfalls beheizten Walzen erfolgen.

Die Kombination von Fasern mit verschiedenen Schmelzpunkten zur Erzeugung von thermoplastisch verformbaren Halbzeugen ist prinzipiell seit längerem bekannt, z.B. zur Verfestigung von Vliesen mittels eingearbeiteter thermoplastischer Schmelzklebefasern oder auch zur Verfestigung von Fasersträngen aus nicht schmelzenden Fasern durch senkrecht dazu in Abständen geführte thermoplastische Verklebungsfasern.

Im allgemeinen handelt es sich hier jedoch um textile Konstruktionen, die nicht zur Erzeugung von faserverstärkten Thermoplastformteilen per se gedacht sind, sondern zuvor mit

Le A 22 119

Reaktionsharzen oder Thermoplastplatten kaschiert bzw. ausgerüstet werden müssen. Es ist auch schon vorgeschlagen worden, mit Harzen ausgerüstete Gewebe thermoplastisch zu Formteilen zu verpressen, deren Kette aus einem und deren Schuß
aus einem anderen Fasertyp besteht, deren Schmelzpunkte sich
·um mindestens 20°C unterscheiden, oder Vliese aus solchen
Fasergemischen thermoplastisch zu verarbeiten. Die vorliegende Erfindung bezieht sich im Gegensatz hierzu vorzugsweise
auf Gemische, im wesentlichen parallel liegender Fasertypen,
da dann die für die Ausbildung der Thermoplastmatrix erforderlichen Fließwege, bei gleichzeitiger Umhüllung der Verstärkungsfaser, am kürzesten sind.

Eine Tränkung oder Kaschierung des erfindungsgemäßen textilen
Halbzeugs mit Reaktionsharzen oder Thermoplasten ist nicht erforderlich, obgleich sie auch in Betracht gezogen werden kann.

In diesem Sinne bezieht sich die vorliegende Erfindung auf
folgende spezielle Fälle im wesentlichen parallel liegender
Fasergemische im erfindungsgemäßen textilen Halbzeug:

Diese Fälle gelten für Gewebe, Gestricke oder deren Misch-
und Abwandlungsformen und beziehen sich zum Zwecke einer verdeutlichenden Beschreibung auf einen gedachten Querschnitt
durch das textile Halbzeug. Der Einfachheit halber werden
nur zwei Fasertypen in Betracht gezogen, Kombinationen mit
mehreren Typen sind aber möglich.

Le A 22 119

- 8 -

T   = als Thermoplast wirkende Faser                    = ◯

V   = als Verstärkung wirkende Faser                    = ●

TVT = Kern-(Verstärkung)/Mantel-(Thermoplast)faser =  ⊙

Die folgenden Fälle des erfindungsgemäßen Aufbaues werden ideal schematisiert dargestellt, wobei ∿ andeutet, daß es sich um ein Gewebe oder Gestrick handelt.

a.   T/V

b.   TTTTT / VVVVV
     als Faser- oder Stapelgarn

c.   TV /

d.   TTTTT VVVVV /
     jeweils Faser- oder Stapelgarn

e.   TVVTVTTVVT /
     als Faser- oder Stapelgarn

f.   TV /
     Bifilarfaser; Polyfilarfaser

g.        T
          TVT
          T
     Kern/Mantelfaser

<u>Le A 22 119</u>

Die vorliegende Erfindung bezieht sich insbesondere auf Gestricke und Gewebe bzw. deren Mischformen, in denen die mindestens zwei Typen von Fasern in einem Gemisch der schematisiert in den Fällen a. bis g. dargestellten Anordnung vorliegen.

Neben den gezeigten Anordnungen sind auch deren Kombinationen in Betracht zu ziehen, z.B. Faser- oder Stapelgarne aus Bifilar- oder Kern/Mantelfasern.

Bei Halbzeug, das in Form von Fasersträngen vorliegt, sind die Anordnungen d. und e. von besonderem Interesse.

Selbstverständlich sind auch Mehrfache der gezeigten Anordnungen in Betracht zu ziehen, z.B. mehr als nur je eine Faser oder ein Faserbündel (Garn) je eines Fasertyps in den Fällen a. bis g.

Die textilen Gebilde sollen aus mindestens zwei Fasertypen aufgebaut sein, wobei mindestens eine als Thermoplast fungiert und mindestens eine andere als solche erhalten bleibt, während die erstere Fasertype beim Heißpreßvorgang in die umgebende Matrix überführt wird. Die Fasern können geschlichtet oder ungeschlichtet sein. Zumeist werden geschlichtete Fasern verwendet, wobei es von Vorteil sein kann, bei den nicht schmelzenden Fasern Schlichten zu verwenden, die auf den jeweiligen Thermoplasttyp optimiert sind. Solche Schlichtetypen z.B. für Glasfasern sind dem Fachmann bekannt.

Le A 22 119

Das Gewichtsverhältnis von thermoplastischen zu anderen Fasertypen kann innerhalb des als Halbzeug dienenden textilen Gebildes schwanken, z.B., um an bestimmten geometrischen Bezirken des angestrebten Formteils spezielle Verstärkungseffekte zu erzielen; üblicherweise ist das textile Gebilde jedoch gleichmäßig aufgebaut, was die Faserzusammensetzung angeht. Natürlich kann durch z.B. Einweben oder Einstricken spezieller Muster oder Geometrien in das textile Gebilde dessen Gesamtcharakter speziellen Erfordernissen in bezug auf die Verarbeitbarkeit oder die Eigenschaften der daraus herzustellenden Formkörper angepaßt werden.

Das Gewichtsverhältnis der Fasertypen kann prinzipiell beliebig gewählt werden. Die besten Ergebnisse in Bezug auf die Formteilfestigkeiten werden jedoch dann erhalten, wenn der sich beim Heißpreßvorgang nicht thermoplastisch verformende Faseranteil 10 bis 90 Gew.-%, vorzugsweise 20 bis 85 Gew.-%, insbesondere 60 bis 80 Gew.-% ist.

Der thermoplastische Fasertyp besteht aus den weiter oben bereits beschriebenen thermoplastischen Werkstoffen. Hierbei ist es zwar von Vorzug, aber nicht unbedingt erforderlich, daß die Durchmesser und Längen der thermoplastischen Faseranteile etwa in der gleichen Größenordnung liegen, wie die Durchmesser und Längen der nicht als Thermoplast fungierenden Faseranteile. Es können auch ohne weiteres thermoplastische Fasern mit Durchmessern verwendet werden, die ein Vielfaches z.B. das Zehn- oder Fünfzigfache der nicht thermoplastischen Fasern und umgekehrt betragen.

Le A 22 119

Als nicht als Thermoplast fungierende Fasern werden solche verstanden, die unter den für die thermoplastischen Faseranteile geeigneten Heißpreßbedingungen noch nicht schmelzen bzw. thermoplastisch verformt werden, d.h. als solche erhalten bleiben. Es ist durchaus möglich, daß solche Fasern, etwa Glasfasern, bei höheren Temperaturen ebenfalls als Thermoplast wirken könnten. Außer Glasfasern sind hier beispielsweise sonstige anorganische und organische Fasern geeignet, wie etwa Kohlenstoffasern, Fasern aus verschiedensten Metallen und Metallegierungen, etwa aus Stahl, Messing, Kupfer, Aluminium, aus verschiedensten Metallnitriden oder -carbiden, Metalloxidfasern, etwa Al-Oxidfasern, Silikatfasern, z.B. Kaolinfasern, Ca-Silikatfasern, Ca-Sulfatfasern, Fasern aus verschiedensten Gläsern, Fasern aus organischen Polymeren, etwa Polyacrylnitrilfasern, Polyester-, Polyamidfasern, Polyimidfasern, wie sie z.B. unter den Handelsnamen Dralon, Trevira, Perlon, Kevlar bekanntgeworden sind.

Die erfindungsgemäß zusammengesetzten flexiblen textilen, zumeist flächigen Gebilde sind besonders gut handhabbar. Sie können gerollt, gewickelt, geknickt aufbewahrt werden und gegebenenfalls durch den Herstellungsprozeß des textilen Gebildes speziell strukturiert und den Erfordernissen des Formteils speziell angepaßt sein. Sie lassen sich demgemäß auch z.B. kontinuierlich von der Rolle verarbeiten oder auch gegebenenfalls direkt vor Ort.

Zweckmäßigerweise werden die als Halbzeug dienenden textilen Gebilde vor dem Verarbeiten möglichst gut getrocknet. Die Verarbeitung geschieht durch Heißpressen, gegebenenfalls unter Anlegen eines Vakuums oder unter Schutzgas nach dem Fachmann geläufigen Methoden.

Le A 22 119

Die Preßdrucke können zwischen 0,5 und über 200 bar liegen, sie richten sich wie auch die Preßtemperaturen von ca. 80 bis über 380°C nach den Erfordernissen des Fasermaterials, der Konstruktion des textilen Gebildes und der Form für das Formteil und können von Fall zu Fall leicht durch Vorversuche ermittelt werden. Der Verformungsprozeß kann auch in mehreren Druck- und/oder Temperaturstufen vorgenommen werden, z.B. um zunächst eine Vorverfestigung des ursprünglich flexiblen Halbzeuges zu erzielen und später die endgültige Verformung anzuschließen. Auch partielle Heißpreßmaßnahmen zur Modifizierung des ursprünglichen textilen Halbzeuges sind möglich, z.B. die partielle Verfestigung oder Verschweißung an speziellen geometrischen Orten des Halbzeuges.

Ein besonderer Vorteil des erfindungsgemäßen Verfahrens besteht darin, daß auch solche thermoplastischen Materialien zu faserverstärkten Formteilen verarbeitet werden können, die besonders hochviskose Schmelzen ergeben und daher unter konventionellen Verarbeitungsbedingungen ein schlechtes Fließverhalten zeigen. Durch die im vorfabrizierten Halbzeug, z.B. einem Gestrick, vorgegebene räumliche Nähe der beiden Faseranteile ist im letzten Verarbeitungsschritt zum Fertigteil nur ein sehr kurzer Fließweg von der thermoplastischen Komponente zu erbringen.

Auch ist es auf die erfindungsgemäße Verfahrensweise besonders einfach, Formteile aus kombinierten Verstärkungsfasern wie z.B. Glas/Kohlenstoff oder Glas/Aramide etc. herzustellen, deren gleichzeitige Einarbeitung in thermoplastische Granulate für den Spritzguß in Mengen größer 20 % außerordentlich schwierig, wenn nicht unmöglich ist.

Le A 22 119

Arbeitet man mit textilen flexiblen Faserbündeln, dann kann man Profile und Formkörper auch durch Ziehen (kontinuierlich oder intermittierend) durch beheizbare Düsen oder Düsenkaskaden mit gegebenenfalls unterschiedlichen Geometrien oder Temperaturen, bzw. Drücken, bzw. Geschwindigkeiten oder in Zugrichtung geöffnete Formen oder beheizte (Metall)Tauchbäder unter Verformung herstellen. Auch das Verformen auf beheizbaren Rollenpaaren, Walzenstühlen oder in Walzenspalten oder auch ohne direkte Berührung mit Formoberflächen, z.B. durch Ausübung eines Zuges auf den Faserstrang oder durch Umwickelung eines Stranges und gleichzeitiges oder vorheriges oder nachheriges Beheizen, gegebenenfalls unter Schutzgas, kommt hier in Betracht. Die Umwickelung kann mit schrumpffähigen Fasern erfolgen, die Beheizung durch Wärmeleitung, Wärmestrahlung, Hochfrequenz, Ultraschall, Mikrowellen oder sonstige Verfahren.

Die Verwendung von Antihaftbeschichtungen oder Gleitmitteln auf der Verformungsstrecke ist in Betracht zu ziehen, z.B. Fluorpolymere, Wachse, Fette, Silikonöle usw.

Vorzugsweise erfolgt das Heißverpressen der Faserbündel kontinuierlich zwischen beheizbaren Profilrollen oder mittels beheizbarer Düsen bzw. Düsenstrecken. Auf diese Weise lassen sich besonders leicht vorzugsweise endlose Profile, z.B. Rundstäbe, Stäbe mit rechteckigen, dreieckigen, T-förmigen, U-förmigen, Z-förmigen oder O-förmigen Querschnitten, z.B. Rohre herstellen. Insbesondere unidirektional faserverstärkte Thermoplastprofile sind so herstellbar, die aufgrund des hohen, mit diesem Verfahren erreichbaren Verstärkungsfasergehalt hervorragende Zugfestigkeiten der Längsrichtung besitzen.

Die erfindungsgemäßen Halbzeuge sollen prinzipiell Bündel oder Scharen von möglichst parallel liegenden Fasern dar-

<u>Le A 22 119</u>

stellen. Es ist aber auch daran zu denken, daß diese Faseranordnung durch nicht parallel liegende Fasern fixiert werden kann, z.B. durch Umwickelung oder Vernadelung von Faserbündeln oder indem Faserbündel durch Schußfäden oder Verflechtungen oder Verschweißungen, Verklebungen fixiert sind. Es ist ebenfalls in Betracht zu ziehen, daß anstelle oder zusammen mit Faserbündeln auch Bändchen aus Fasern verwendet werden können. Diese können ihrerseits wieder Gewirke, Gelege, Geflechte, Gestricke, Gewebe oder Vliese aus Fasern, Garnen oder Bändchen sein. Es kann auch an eine Fixierung der Fasern innerhalb der Faserbündel durch eine partielle oder durchgehende, mehr oder weniger lockere Verklebung durch verschiedenste Bindemittel gedacht werden. Oftmals kann jedoch ohne derartige Fixierungshilfen gearbeitet werden, es reicht dann die natürliche Parallellage der Fasern in der unidirektional angeordneten Faserschar aus.

Es können auch Stränge verschiedener Fasertypen in gegebenenfalls speziellen Geometrien zu einem Halbzeug vereinigt sein, so daß z.B. Profile erhältlich sind, die in einzelnen Bereichen mit Glasfasern, in anderen Bereichen mit C-Fasern verstärkt sind.

Die flexiblen Halbzeuge sollen aus mindestens zwei Fasertypen bestehen.

Hierbei ist als ein Sonderfall in Betracht zu ziehen, daß es erfindungsgemäß auch möglich ist, zwei Fasertypen in einer Faser zu vereinen, indem man eine Bifilarfaser oder Kern-Mantelfaser verwendet, im erfindungsgemäßen Fall ist bei einer Kern-Mantelfaser der Thermoplast bevorzugt als Fasermantel angeordnet. Üblicherweise sind die mindestens zwei Fasertypen jedoch als getrennte Individuen im Gemisch in einer Art Roving enthalten.

Le A 22 119

Hierbei ist es möglich, die verschiedenen Fasertypen vorzugsweise als solche im Gemisch miteinander zu verarbeiten, wobei ein möglichst gleichförmiges Gemisch möglichst parallel liegender Fasern verschiedenen Typs anzustreben ist. Es ist aber auch möglich, im textilen Gebilde Garne aus verschiedenen Fasertypen, z.B. Stapelfasern oder Endlosfasern, im möglichst gleichförmigen Gemisch zu verarbeiten. Es kann auch in Betracht gezogen werden, z.B. in einem Gewebeband Kette und Schuß aus den verschiedenen Fasertypen zu verwenden.

Die statistisch möglichst gute Mischung möglichst parallel liegender Fasern verschiedenen Typs ist für endlose Fasern oder Langfasern durch Zusammenführen der verschiedenen Fasertypen durch simultanes Einspeisen in die üblichen textilen Verarbeitungsprozesse in dem Fachmann geläufiger Weise leicht möglich, bei Kurzfasern oder der Herstellung von gegebenenfalls in Bändchen überführbaren Sandwichstrukturen kann auch ein Gemisch der verschiedenen Fasertypen durch z.B. elektrostatische Flockungsverfahren und gegebenenfalls späteres gerichtetes gleichförmiges Umlegen des Faserflors, z.B. auf gegebenenfalls beheizten Walzen erfolgen.

In den folgenden Beispielen sind Teile immer Gewichtsteile und Prozente immer Gewichtsprozente, sofern nichts anderes vermerkt ist.

Die folgenden Beispiele sind mit Glasfasern (etwa 25 μm Ø) und Polyamid ausgeführt. Das Polyamid ist eine Perlonfaser (etwa 20 μm Ø) und stellt den Thermoplasten dar. Anstelle der Glasfasern können auch Kohlenstoff- oder Polyaramid- oder Metallfasern treten, und an Stelle von Perlon auch aromatische Polycarbonate, Polystyrol, Polypropylen oder Polyethylenterephthalat.

Le A 22 119

0133893

### Beispiel 1:

Durch Zusammenführen von (Monofilen) Fasern im Gewichtsverhältnis 72 (Glas) zu 28 (Perlon) wird eine Art Garn
(Rowing) hergestellt, das in schwach gezwirnter und ungezwirnter Form aufgespult wird.

Aus dem ungezwirnten Material wird in Leinenbindung ein
Gewebe mit einem m²-Gewicht von ca. 1.100 g hergestellt,
aus dem schwach gezwirnten Material ein Strickteil
("Strickschlauch") mit einem m²-Gewicht von ebenfalls
ca. 1.100 g.

Beide Gebilde sind voll textil flexibel und lassen sich
aufrollen und schneiden bzw. nähen und verschweißen.

Das "Leinengewebe" wird über Silikagel getrocknet und
läßt sich in der Plattenpresse bei 60 kJ/m² und 180°C
ohne Probleme zu einem lunkerfreien Plattenteil von
0,45 mm Dicke verpressen. Die Platte hat, in Faserrichtung gemessen, einen E-Modul von ca. 36 kN/mm² (Zugversuch) und liegt somit ausgezeichnet hoch. Verpreßt man
den "Strickschlauch" unter gleichen Bedingungen, so erhält man eine ca. 0,5 mm dicke Platte mit einem E-Modul
von ca. 29 kN/mm², gemessen in Maschenrichtung.

Der "Strickschlauch" läßt sich im Gegensatz zum Gewebe
faltenfrei zu einer Kugelhalbschale bei 85 kJ/m² und
195°C verpressen. Diese hat ihre größte Gewebedichte
und Widerstandsfähigkeit im Randbereich der Halbkugel.

Le A 22 119

0133893

Durch Verpressen eines Sandwiches mit dem Leinenhalbzeug als Deckschicht und dem Gestrick als Zwischenschicht läßt sich bei 75 kJ/m² und 185°C ein hochfestes Plattenmaterial herstellen, das als Abdeckung und Konstruktionsmaterial geeignet ist.

**Beispiel 2:**

Durch Zusammenführen von Garnen (Multifilamenten) im Gewichtsverhältnis 65 (Glas) zu 35 (Perlon) wird eine Art Garn hergestellt, das aufgespult und von der Spule aus über eine beheizte Walze geführt wird, die einmal das 25,0 g/m wiegende Garngemisch bei 250°C zu einem Flachprofil von ca. 0,45 mm Dicke, zum anderen mittels einer Rundkerbung mit ca. 0,8 mm Radius zu einem Draht mit ca. 1,8 mm Durchmesser verpreßt. Der Draht hat einen im Zugversuch in Faserrichtung gemessenen E-Modul von ca. 36 kN/mm².

Aus dem aufgespulten Garn wird außerdem analog Beispiel 1 ein Gewebe hergestellt und bei 180°C auf der Plattenpresse - wie bei Beispiel 1 - eine ca. 0,45 mm dicke Platte gepreßt, diese ist hoch elastisch und hat einen E-Modul, faserparallel im Zugversuch gemessen, von ca. 33 kN/mm².

Aus dem Garn wird ein dreiadriger Zopf geflochten und auf der Walze zu einem Flachprofil wie oben verpreßt. Das Profil hat eine Dicke von 0,6 mm und einen in Faserverzugsrichtung gemessenen E-Modul (Zugversuch) von 30 kN/mm².

Le A 22 119

**Beispiel 3**  (Arbeitsweise mit Faserbündel)

Durch Zusammenführen von (monofilen) Fasern im Gewichtsverhältnis 72 (Glas) zu 28 (Perlon) wird eine Art Faserbündel (Roving) hergestellt, das aufgespult wird.

5 solcher Rovings werden zu einem Strang zusammengefaßt und durch eine auf 230°C geheizte trichterförmige Düse aus Stahl geführt in Richtung auf das enge Mundstück, das 5 mm Durchmesser hat und den mit 30 cm/Min. austretenden aufgeheizten und verschmolzenen Strang gerade aufnehmen kann. Unmittelbar nach der Düse wird ein teflonisiertes gerades Kupferrohr mit 18°C-Wasserkühlung als den Rundstrang festumschließende Kühlstrecke von 9 cm Länge verwendet. Der Düsenteil mit dem engen (5 mm) Durchmesser, der als Heizstrecke dient, hat eine Länge von ebenfalls 9 cm. Der erhaltene Rundstrang ist opak, läßt sich aufrollen und weist, wie eine rasterelektronenmikroskopische Aufnahme zeigt, vollständig vom Polyamid umhüllte, dicht gepackte Glasfasern auf.

Wickelt man das lineare Profil zu einer Spirale auf, so zeigt diese ein normales Rückstellvermögen zur Wiedererreichung des linearen Zustandes. Tempert man eine derartige Spirale 1 Stunde bei 155°C und kühlt dann ab, so bleibt die Spirale erhalten und kann z.B. als Federelement benutzt werden.

**Beispiel 4**

Es wird wie in Beispiel 3 gearbeitet. Man stellt die Düse jedoch so in ein auf 110°C vorgeheiztes Metallbad, daß die 0,5 cm Durchmesser-Düsenheizstrecke senkrecht aus dem Bad herausragt, während das Faserbündel über Rollen 30 cm innerhalb des Metallbades der Düse zugeführt wird. An die Heizstrecke schließt sich wieder die Kühlstrecke an. Außerdem wird der aus der Kühlstrecke austretende Rundstab noch mit

Le A 22 119

Kühlluft angeblasen. Das Metallbad heizt den Faserstrang vor, so daß nunmehr mit einer Abzugsgeschwindigkeit von 1 m/Min. gearbeitet werden kann. Da das Metallbad die Luft aus dem Faserstrang drückt, wegen der Kohäsion diesen aber nicht durchsetzt, erhält man völlig blasenfreie Profilstäbe.

## Beispiel 5

Es wird wie in Beispiel 3 gearbeitet, jedoch haben Heiz- und Kühlstrecke einen quadratischen Querschnitt mit einer Kantenlänge von 0,44 cm. Man erhält analog Beispiel 3 einen Vierkantstab.

## Beispiel 6

Es wird wie bei Beispiel 3 gearbeitet, jedoch anstelle von Perlon wird Polyethylenterephthalat-Faser verwendet und die Heiztemperatur auf 260°C erhöht. Man erhält einen Rundstab von hervorragender Steifigkeit, der als Tragebogenelement für Folientunnel-Gewächshäuser verwendet werden kann.

## Beispiel 7

Zur Herstellung unidirektional langglasfaserverstärkter Rohre werden durch einen Satz von z.B. 6 220°C-beheizten Düsen, die kreisförmig angeordnet sind, je ein kombinierter Roving aus Polyamidfilamentgarn und Glasfasern (30 : 70) so gezogen, daß sich die durch die entstehende Polyamidschmelze nunmehr getränkten Glasfaserstränge symmetrisch um ein zentral eingeführtes Polystyrol-Hohlprofil als sogenannter Innenliner legen können. In einer zweiten, ebenfalls beheizten ringförmigen Kalibrierdüse erhält das entstandene langglasfaserverstärkte Polyamidrohr seine endgültige Form. Nachgeschaltet wird eine Kühlstrecke nebst Abzugsaggregat. Das erhaltene unidirektional glasfaserverstärkte Rohr zeichnet sich durch hohe Zugfestigkeit, Steifigkeit und

Le A 22 119

Innendruckfestigkeit aus. Man kann auch ohne Probleme als letzten Verfahrensschritt eine nochmalige Thermoplastummantelung vorsehen. Statt Glasfasern können z.B. ebenso Aramid- oder C-Fasern verwendet werden, statt Polyamid andere thermoplastische Monofilamente oder Garne, wie z.B. Polycarbonatfasern oder Polypropylenbändchen.

Le A 22 119

Patentansprüche:

1. Verfahren zur Herstellung von faserverstärkten Formkörpern aus thermoplastischem Material durch Heißverpressen von Halbzeugen, dadurch gekennzeichnet, daß als Halbzeuge flexible textile Gebilde verwendet werden, die aus Gemischen von mindestens zwei Fasertypen aufgebaut sind, wobei mindestens eine Fasertype unter den Heißpreßbedingungen schmelzbar ist und als Thermoplast fungiert, und mindestens eine andere Fasertype unter den vorgenannten Heißpreßbedingungen als solche erhalten bleibt.

2. Verfahren nach Anspruch 1, dadurch gekennzeichnet, daß die flexiblen textilen Gebilde die Form von Faserbündeln oder Fasersträngen haben.

3. Verfahren nach Anspruch 1, dadurch gekennzeichnet, daß die textilen Gebilde aus Fasergemischen aufgebaut sind.

4. Verfahren nach Anspruch 1, dadurch gekennzeichnet, daß die textilen Gebilde aus Faser-/Garngemischen aufgebaut sind.

5. Verfahren nach Anspruch 1, dadurch gekennzeichnet, daß als textile Gebilde Gestricke und/oder Gewebe verwendet werden.

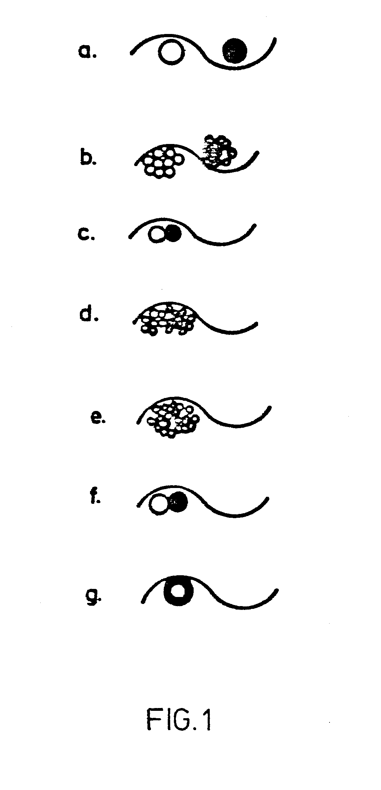

6. Verfahren nach Anspruch 5, dadurch gekennzeichnet, daß die Gestricke und/oder Gewebe den in Fig. 1 a bis g schematisch dargestellten Aufbau haben, wobei

    ○      die als Thermoplast,

    ●      die als Verstärkung wirkende Faser, und

    ◉      eine Kern-/Mantelfaser

darstellt.

7. Verfahren nach Ansprüchen 1 bis 6, dadurch gekennzeichnet, daß die textilen Gebilde 10 bis 90 Gew.-% an nicht als Thermoplast fungierendem Fasermaterial enthalten.

Le A 22 119

8. Verfahren nach Ansprüchen 1 bis 7, dadurch gekennzeichnet, daß als Fasern, die als Thermoplast fungieren, solche aus organischen Thermoplasten verwendet werden.

9. Faserverstärkte Formteile, hergestellt nach Ansprüchen 1 bis 8.

<u>Le A 22 119</u>

FIG.1